# EUROPEAN PATENT APPLICATION

(11) **EP 4 238 916 A1**
(43) Date of publication of application: **06.09.2023**
(21) Application number: 22160194.1
(22) Date of filing: 04.03.2022
(51) Int. Cl.: B65H 75/44, H02P 6/18

(54) **HOSE REEL ASSEMBLY**

(71) Applicant: HUSQVARNA AB, 561 82 Huskvarna (SE)
(72) Inventor: Merkle, Martin, 89168 Niederstotzingen (DE); Kienzle, Christian, 73337 Unterböhringen (DE)
(74) Representative: Finkele, Rolf

(57) **Abstract**

A control system **(200)** for a hose reel assembly **(100)** includes a motor **(210),** a power supply unit **(230),** and a controller **(220)** for controlling supply of power to the motor **(210).** The controller **(220)** stops the supply of power to the motor **(210)** for a pre-determined time-period **(T)** and allows the motor **(210)** to run. The controller **(220)** measures Back EMF during the pre-determined time-period **(E).** The control system **(200)** is characterized in that the controller **(220)** is configured to determine a first time instant **(T1)** and a second time instant (**T2**) for measuring Back EMF. The first time instant (**T1**) and the second time instant **(T2)** is different from each other. The controller **(220)** further determines the motor speed **(S)** based on the measured Back EMF at the first time instant (**T1**) and the second time instant **(T2).**

## Description

### TECHNICAL FIELD

The present disclosure relates to a hose reel assembly. More specifically, the present disclosure relates to smooth winding and retraction operation of a hose of the hose reel assembly.

### BACKGROUND

A hose reel assembly is used to provide a flow of fluid, such as water, in spaces, such as lawns, parks, and the like through a hose. The hose reel assembly allows for compact storage of fluid-carrying hoses. The hose reel assembly may either be fixed in a permanent location, like wall mounted hose reel assemblies. Alternatively, the hose reel assembly may be portable and attached to a truck, a wagon, or a cart. The most common styles of hose reel assemblies are spring driven, hand crank, or motor driven.

In the motor driven hose reel assembly, the hose may unwind and/or retract with the help of the motor, preferably a DC motor. However, the hose retraction in conventional motor driven hose reel assembly may be unregulated. Spool diameter of the hose reel assembly may increase with each layer of the hose during the hose retraction and the hose retraction speed during the end stage of the hose retraction may invariably increase in particular if the rotational speed is kept constant. Thus, due to the increased speed of the hose retraction, the hose may rip out of the hands of a user holding the hose. Further, a stopper coupled to the hose proximate to the hose end may strike the hose reel assembly with large momentum and may thereby cause damage to the hose reel assembly. Thus, it is desirable to control and thus vary the hose retraction speed.

The hose retraction speed may be controlled if the unwound hose length is known. The unwound hose length may be calculated or detected by detecting the speed of operation of the motor and then integrating the speed of operation of the motor with the runtime of the motor shaft. One of the methods used therefor is the measurement and thus exploitation of the so called Back Electro-Motive Force (Back EMF) that is the voltage which is opposite in polarity, created by the rotation of a coil in a magnetic field. Thus the Back EMF is the voltage generated during the operation of a rotating motor. Thereby the Back EMF is proportional to the speed of the motor and independent of its load.

An example disclosing the abovementioned co-relations between unwound towel length, motor speed and motor shaft runtime is provided by the United States patent 6,988,689 (hereinafter referred to as '689 reference). The '689 reference provides a hands-free towel dispenser. The towel dispenser includes a housing with a roll of towels inside an interior, a sensor for detecting the presence of an object and generating a signal, a motor driving a dispensing means for dispensing a desired length of towel, a control circuit for receiving the signal from the sensing means and controlling supply of power to the motor driving the dispensing mechanism, and a battery. The control circuit receives the signal from the sensor and supplies power from the battery to the motor to drive the dispensing means to dispense the desired length of towel from the roll. The control circuit determines the speed of operation of the motor driving the dispensing means by using the Back EMF signals generated by the motor. Thereby the control circuit calculates a the run time the motor should drive the dispensing means to dispense the desired length of towel based on the speed of operation of the motor as determined from the Back EMF signals generated by the motor. However, there is still room for improvement making this kind of a system more accurate and reliable when calculating the length of a hose unwound from a hose reel..

### SUMMARY

The objective of the present invention is at least partially achieved by a control system for a hose reel assembly. The control system includes a motor to drive the hose reel and a power supply unit to supply a voltage to drive the motor. The control system further includes a controller for controlling supply of power to the motor. The controller stops the supply of power to the motor for a pre-determined time-period and allows the motor to coast. The controller measures Back EMF during the pre-determined time-period. The control system is characterized in that the controller is configured to determine at least on discrete time instance for measuring the Back EMF. The controller further then determines the motor speed based on the measured Back EMF.

Thus, the present disclosure advantageously provides a control system that controls retraction of a hose into a hose box of the hose reel assembly. The hose reel assembly may either be fixed in a permanent location, like wall mounted hose reel assemblies. Alternatively, the hose reel assembly may be portable and attached to a truck, a wagon, or a cart. The controlled retraction prevents an undesired increase in hose retraction speed towards the end of the hose retraction process. The control system works on the principal of Back EMF measurement during an inactive phase of the motor. Back EMF measurement is indicative of an unwound hose length of the hose reel assembly. Making use of the data from the Back EMF measurement the controller of the control system regulates hose retraction speed based on calculated unwound hose length. Using the Back EMF of the motor, with the Back EMF being proportional to the motors rotational speed but independent of its load, is possible to maintain constant hose retraction speed. Due to the fact that with each part of the hose that is unwound the overall diameter of the hose reel decreases and thus to unwind the same amount of hose at the same time the hose reel has to turn faster. In reverse conclusion when the hose is wound onto the hose reel the rotational speed of the reel has to decrease during time if the same hose length shall be wound at a same time period as the overall diameter constantly increases.

In case one knows the dimensional properties of the hose and hose reel, such as for example the overall length of the hose and the dimensions of the reel (thickness of its axis and its width), one also knows how much length of a hose will be retraced and/or unwound with each revolution of the hose reel.

In one embodiment the controller is configured to determine a first time instant and at least one second time instant for measuring Back EMF during the pre-determined time-period the supply of power to the motor is stopped so that the motor coasts. Thereby the first time instant and the second time instant is different from each other. The controller further measures Back EMF at the first time instant and the second time instant and then determines the motor speed based on the measured Back EMF at the first time instant and the second time instant. With using at least these two measurement values the change in voltage, in particular a gradient change, during the whole period "T" can be estimated and thus used for further calculation. Thus by making several voltage measurements during the measurement period "T" allows for an improved overall Back EMF determination.

In one embodiment the motor is a DC motor and is powered using Puls-Width-Modulation (PWM). Using PWM the motor is not supplied with electric power during all time, with the motor ten being in sort of an inactive or passive mode. During this period in time the Back EMF is determined. In one alternative it is determined at every period where the motor is not supplied with electric power. In another alternative the Back EMF is just determined during individual ones of the many periods where the motor is not supplied with electric power. As here the Back EMF is determined only during individual periods of the many periods where the motor is not supplied with electric power it allows for an extension of the time period 'T' at these individual periods. This on the one hand allows for a longer and thus more accurate measurement duration while on the other hand does not significantly influence the overall working performance of the motor.

Preferably the hose reel assembly is either being fixed in a permanent location, preferably being wall mounted, or being portable or being attached to a truck, a wagon or a cart.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective view of a hose trolley in a driving position, in accordance with an aspect of the present disclosure;
**FIG. 2** illustrates a perspective side view of the hose trolley in an operating position, in accordance with an aspect of the present disclosure;
**FIG. 3** illustrates block diagram of a control system, in accordance with an aspect of the present disclosure; and
**FIG. 4** illustrates a chart showing a first time instant and a second time instant for measurement of Back EMF, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

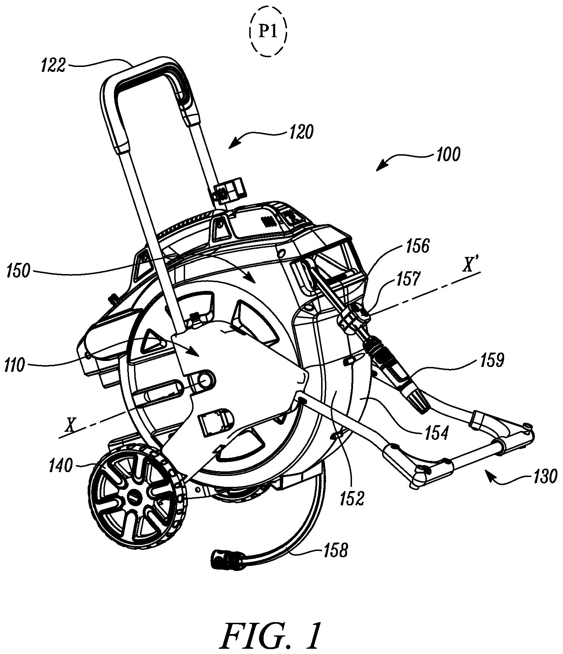

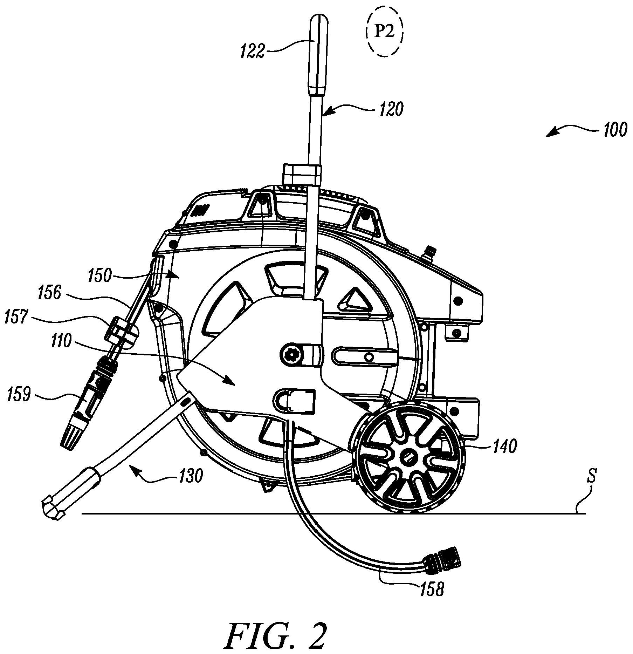

**FIGS. 1** and **2** illustrate a hose reel assembly **100.** The hose reel assembly **100** of the present disclosure is a hose trolley. However, the hose reel assembly **100** may be in other forms such as, but not limited to, a wall-mounted hose reel assembly. The hose trolley **100** is used to house, store, and transport a hose reel **150** (alternately referred to as a hose box **150**) to different installations, such as lawns, parks, and the like for providing a flow of fluid, such as water. The flow of fluid may be provided for firefighting, gardening, surface cleaning and the like activities.

The hose trolley **100** includes a frame **110** that defines a central axis **X-X'.** The frame **110** may be rigid as well as light weight, depending upon application requirements, user-preference, or other considerations. The frame **110** may be manufactured using a metal (preferably aluminum), alloy and the like. The frame **110** of the hose trolley **100** includes a handle **120,** a support stand **130,** one or more wheels **140** and the hose box **150.**

The hose box **150** is housed within the frame **110** along the central axis **X-X'.** The hose box **150** may have a circular, a rectangular or any other shape without limiting the scope of the present disclosure. The hose box **150** may be made from metal, fiberglass, or plastic. The hose box **150** includes a first part **152** and a second part **154.** The first part **152** and the second part **154** may be temporarily or permanently attached to each other, such as by fasteners, screws, any suitable means as used or known in the art. The hose box **150** may be connected to an external water source via a hose **158.** Further, the hose box **150** may supply water for various applications via a hose **156.**

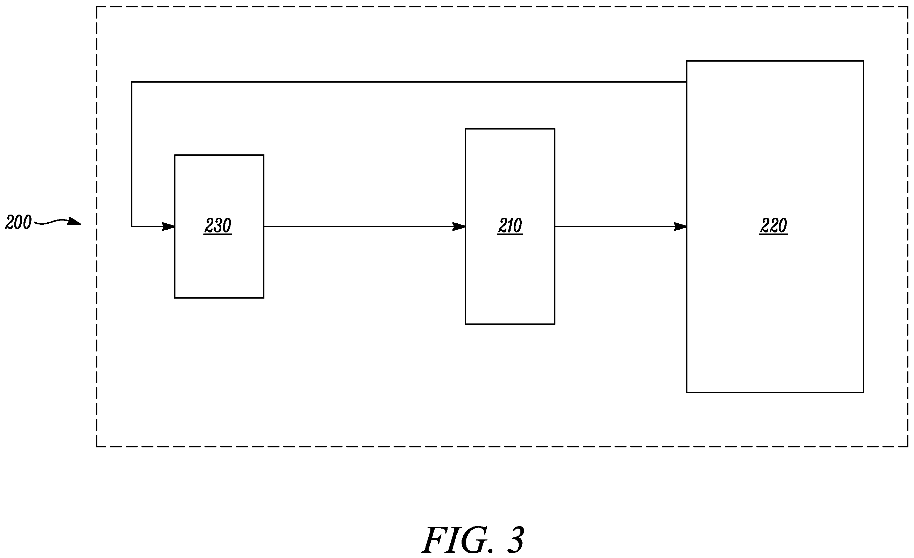

The hose **156** is retracted into the hose box **150** using a motor **210** (as shown in **FIG. 3****).** The motor **210** of the present disclosure is a DC motor. The operation of the motor **210** is controlled via a controller **220** (as shown in **FIG. 3****).** The hose **156** is coupled to a stopper **157** at a location proximate to an end of the hose **156** and to a nozzle **159** at the end of the hose **156** for spraying water for various industrial and domestic applications. The stopper **157** may serve to restrict or stop the nozzle **159** outside the hose box **150** during the retraction of the hose **156** inside the hose box **150.** In one embodiment the unwinding is also done via the motor, in particular if the hose is rather non-flexible and/or of increased diameter. In an alternative embodiment the unwinding of the hose from the hose reel is done with manual force and the motor controls the unwinding speed or the rotational speed of the hose reel and applies some breaking forces that make the hose reel to decrease its rotating speed.

The support stand **130** of the frame **110** includes a U-shape grip. The support stand **130** may preferably be formed in one piece or alternatively may be formed in two pieces connected to each other by any means know in the art.

The one or more wheels **140** of the frame **110** (as shown in **FIGS. 1** and **2**) are a pair of wheels. The pair of wheels **140** may be operationally coupled each on both the sides of the hose trolley **100** to provide sideways fall-over support. The pair of wheels **140** may be rotatably coupled with an axle (not shown). The wheels **140** may ease support and movement of the hose trolley **100** on the level surface **"S"** or improve portability between different locations/installations. In some embodiments, the wheels **140** may be caster wheels **140.** The caster wheels **140** may help to easily manipulate the hose trolley **100** on the level surface **"S".** In some embodiments, the one or more wheels **140** and the axle may be provided with dampers (not shown) to avoid shocks incurred due to movement on any uneven surfaces, among other considerations. In some embodiments, the one or more wheels **140** may be powered by an electric motor (not shown), or any other powering means.

In some embodiments, the wheels **140** may be removably coupled with the frame **110.** The wheels **140** may be removable to allow easy servicing, or even replacement. Further, the removable feature of the wheels **140** may make the hose trolley **100** more compact for packaging.

The handle **120** of the frame **110** includes a grip portion **122.** The grasping of the grip portion **122** of the handle **120** may provide better hold and safe working, movability of the hose trolley **100** between locations. In some embodiments, the grip portion **122** may be defined as an inverted U-shaped portion of the handle **120.** The material used for the grip portion **122** may preferably be, but need not necessarily, PVC or nitrile rubber, or any other plastic or polymer to suit application needs.

In some embodiments, the handle **120** of the hose trolley **100** may be pivotably coupled to the frame **110.** The pivotable nature of the handle **120** may improve the ergonomics of the hose trolley **100.** The pivotable handle **120** may also make the hose trolley **100** more compact for packaging, storage, and travel. In some embodiments, the handle **120** may include a locking mechanism to lock the handle **120** in the pivotable position. The locking mechanism may provide a safe and trouble-free operation by disallowing any accidental movement of the pivotable handle **120.** The locking mechanism may be lever such as a ring-shaped lever to allow easy locking/unlocking of the handle **120.** In some embodiments, the handle **120** may be telescopic. The telescopic nature of the handle **120** may further improve the ergonomics of the hose trolley **100.** The user may adjust the height of the handle **120** to a comfortable position and easily hold or maneuver the hose trolley **100** on the level surface **"S".**

The hose trolley **100** with its construction features as discussed above defines a driving position "P1" (as shown in **FIG. 1****)** and an operating position "P2" (as shown in **FIG. 2****).** In the driving position "P1", the hose trolley **100** is supported on the level surface **"S"** by the one or more wheels **140** and is movable on the level surface **"S".** The support stand **130** does not contact the level surface **"S"** in the driving position of the hose trolley **100.** Thus, the hose trolley **100** may be easily maneuvered on the level surface **"S",** by engagement with the handle **120,** in the driving position with the help of the one or more wheels **140.** In the operating position "P2", the hose trolley **100** is supported on the level surface **"S"** by the support stand **130** and the one or more wheels **140.**

Further, in the operating position "P2", the motor **210** retracts (or even in some embodiments unwinds) the hose **156** as per the requirement. As illustrated in **FIG. 3****,** the motor **210** derives the power for its operation from a power supply unit **230.** The power supply unit **230** may be a battery that supplies a voltage "V1" to operate or drive the motor **210.** In some embodiments, the power supply unit **230** may be a rechargeable battery. In some embodiments, the power supply unit **230** may be a single use battery. Further, the power supply unit **230** may be coupled to the motor **210** via wires or leads (not shown).

The power supply unit **230** may selectively supply the voltage "V1" to operate or drive the motor **210** based on an output from the controller **220.** The controller **220** controls supply of power to the motor **210** based on the hose retraction status of the hose **156.** For example, the controller **220** may stop the supply of power to the motor **210** when the hose retraction of the hose **156** is complete. In some embodiments, the controller **220** may identify completion of hose retraction process by overcurrent detection.

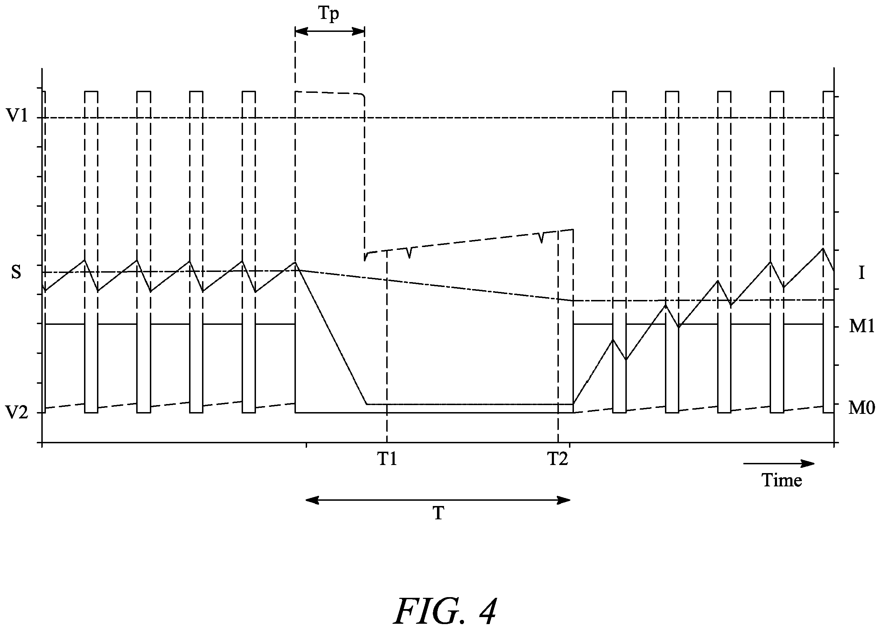

The controller **220** is configured to control or regulate the hose retraction speed of the hose **156.** The controller **220** is configured to prevent undesired increase in hose retraction speed of the hose **156** towards the end of the hose retraction process. The controller **220** regulates the hose retraction speed of the hose **156** by measurement of Back EMF during an inactive phase "M0" (as shown in **FIG. 4****)** of the motor **210.** Back EMF measurement allows to determine the rotational speed of the hose reel **150** and integrating the measurement values at different instances of time provides an indication of the length of the hose that is wound onto or unwound from the hose reel assembly **100.** This is due to the fact that with each part of the hose that is unwound the hose reel decreases in its overall diameter, and thus to unwind the same amount of hose at the same time the hose reel has to turn faster. In reverse conclusion if the hose is wound onto the hose reel the rotation of the reel has to decrease during time if the same hose length shall be would at a same time period as the overall diameter constantly increases. The knowledge of the unwound hose length of the hose **156** allows the controller **220** to control the motor speed "S" such that the hose retraction speed of the hose **156** is maintained constant. In some embodiments, the hose retraction speed of the hose **156** may be significantly reduced before the end of the hose retraction process to prevent the stopper **157** from striking hard the hose box **150.**

As illustrated in **FIG. 4****,** for the measurement of Back EMF, the controller **220** stops the supply of power to the motor **210** for a pre-determined time-period "T" and allows the motor **210** to coast. The controller **220** measures Back EMF during that pre-determined time-period "T". To measure the amount of BackEMF during that pre-determined time-period "T", the controller **220** in a first step waits for time-period "Tp" after the motor **210** is switched off. During the inactive phase of the motor **210** the voltage supplied quals '0' (indicated by "M0") whereas the active phase of the motor **210** is supplied with voltage necessary to drive the motor (indicated by "Ml"). During the time-period "Tp" after the motor **210** is switched off, the motor current "I" through the inductance (not shown) in the motor **210** continues to flow through a diode, a transistor or the like (not shown) and the motor current "I" slowly decreases. After, the time-period "Tp" is passed, the controller **220** measures within the time period "T" the Back EMF at least once. It is obvious that the quality of the determination of the Back EMF is increased if several measurements are made at distinct times during the time period "T" and the results averaged. With the example described with Fig. 4 the controller **220** determines a first time instant "Tl" and a second time instant "T2" for measuring Back EMF such that the first time instant "Tl" and the second time instant "T2" is different from each other. Thus the controller **220** advantageously measures only at the first time instant "Tl" and the second time instant "T2"and not quasi constantly for the full-length of time-period "T" after passing of the time-period "Tp" as this is the case with the state of the art described with the United States patent 6,988,689. The one or more measurement during the inactive phase "M0" also allows to estimate the motor speed "S" during the active phase "M1" of the motor **210.**

Further the difference in voltage at and the time between two measurements allow to calculate the gradient of the Back EMF from which the decrease in motor speed "S" during inactive phase "M0" of the motor **210** can be derived.

The terminals of the motor **210** are supplied with the voltages "V1" and "V2" by the power supply **230** to drive it. During the measurement period 'T' at which the Back EMF is determined the motor **210** is in its inactive state "M0". During this period the difference of the voltages "V1" and "V2" at the terminal of the motor **210** equals the Back EMF.

The controller **220** further determines the motor speed "S" based on the measured Back EMF at the first time instant "Tl" and the second time instant "T2". The motor speed "S" in conjunction with the runtime of the motor shaft (not shown) is utilized by the controller **220** for calculating the unwound hose length of the hose **156.** The knowledge of the unwound hose length of the hose 156 allows the controller 220 to control the motor speed "S" during the retraction of the hose 156. It is obvious that not only during retracing of the hose the Back EMF can be used to provide an indication on how much of the hose is already would onto the hose reel and thus how much (length) of the hose is still able to be retracted, but it may also be possible to use the Back EMF already during the unwinding of the hose so that it is also possible to monitor how much (length) of the hose is already wound from the hose reel.

In one embodiment the motor **210** is a DC motor and is powered using Puls-Width-Modulation (PWM). Using PWM the motor **210** is not supplied with electric power during the inactive/unpowered part of the PWM period. Thus alternatively the Back EMF can be determined at every period where the motor **210** is not supplied with electric power or the Back EMF is determined only during individual ones of the many periods where the motor is not supplied with electric power.

Thus in an embodiment where the determination of the Back EMF is done only during individual ones of the many periods where the motor **210** is not supplied with electric power does allow to extend at least one of the individual periods during which the Back EMF is determined in time. This on the one hand allows for a longer and thus mor accurate measurement duration while one the other hand does not significantly influence the overall working performance of the motor **210.**

The example shown with Fig. 4 relates to the alternative embodiment where the measurement of Back EMF is done only during individual ones of the many periods where the motor **210** is not supplied with electric power. The controller **220** may advantageously introduce dedicated brakes for Back EMF measurement and uses higher pulse width modulation frequencies between these brakes. This may allow the usage of a high overall duty cycle, high and efficient pulse width modulation frequency and still continuous motor speed measurement.

Thus, the present disclosure advantageously provides a control system **200** that controls retraction of the hose **156** into a hose box **150** of the hose reel assembly **100.** The controlled retraction prevents an unwanted increase in hose retraction speed towards the end of the hose retraction process. The control system **200** works on the principal of Back EMF measurement during the inactive phase "M0" of the motor **210.** Back EMF measurement is indicative of an unwound hose length of the hose reel assembly **100.** The controller **220** of the control system **200** regulates hose retraction speed based on calculated unwound hose length.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Hose Reel Assembly/ Hose Trolley
- **110**: Frame
- **120**: Handle
- **122**: Grip Portion
- **130**: Support Stand
- **140**: Wheels
- **150**: Hose Reel/ Hose Box
- **152**: First Part
- **154**: Second Part
- **156**: Hose
- **157**: Stopper
- **158**: Hose
- **159**: Nozzle
- **200**: Control System
- **210**: Motor
- **220**: Controller
- **230**: Power Supply Unit
- **X-X'**: Central Axis
- **S**: Level Surface
- **P1**: Driving Position
- **P2**: Operating Position
- **T**: Pre-determined Time-period
- **T1**: First Time Instant
- **T2**: Second Time Instant
- **Tp**: Time-Period
- **M1**: Active Phase
- **M0**: Inactive Phase
- **S**: Motor Speed
- **V1**: Voltage
- **V2**: Voltage
- **I**: Motor Current

## Claims

1. A control system **(200)** for a hose reel assembly **(100)** comprising:
a motor **(210)** to drive the hose reel;
a power supply unit **(230)** to supply a voltage **(VI)** to drive the motor **(210);** and
a controller **(220)** for controlling supply of power to the motor **(210),** wherein
the controller **(220)** stops the supply of power to the motor **(210)** for a pre-determined time-period **(T)** and allows the motor **(210)** to run, and wherein
the controller **(220)** measures Back EMF during the pre-determined time-period **(T);**
**characterized in that:**
the controller **(220)** is configured to:
determine at least one discrete time instance at which the Back EMF is measured;
determine the motor speed **(S)** based on the measured Back EMF.

2. The control system **(200)** of claim 1, wherein the controller **(220)** determines a first time instant (**T1**) and at least one second time instant **(T2)** for measuring Back EMF, wherein the first time instant **(T1)** and the second time instant **(T2)** is different from each other; and
measures Back EMF at the first time instant **(T1)** and the second time instant **(T2);**
and determines the motor speed **(S)** based on the measured Back EMF at the first time instant **(T1)** and the second time instant **(T2).**

3. The control system **(200)** of any one of the preceding claims, wherein Back EMF measurement is indicative of an unwound hose length of the hose reel assembly **(100).**

4. The control system **(200)** of claim 3, wherein the controller **(220)** regulates hose retraction speed based on calculated unwound hose length.

5. The control system **(200)** of any of the preceding claims, wherein the motor **(210)** is a DC motor and is powered using Puls-Width-Modulation (PWM).

6. The control system **(200)** of any of claims 1-5, wherein the Back EMF is determined at every period where the motor is not supplied with electric power.

7. The control system **(200)** of any of claims 1-5, wherein the Back EMF is determined only during individual ones of the many periods where the motor is not supplied with electric power.

8. The control system **(200)** of claim 7, wherein at least one of the individual periods during which the Back EMF is determined is extended in time, to allow for a longer measurement duration.

9. The control system **(200)** of any of the preceding claims, wherein the hose reel assembly is either being fixed in a permanent location, preferably being wall mounted, or being portable or being attached to a truck, a wagon or a cart.
